# EUROPEAN PATENT APPLICATION

(11) **EP 2 039 462 A1**
(43) Date of publication of application: **25.03.2009**
(21) Application number: 07767070.1
(22) Date of filing: 08.06.2007
(51) Int. Cl.: B23Q 3/06

(54) **SWING-TYPE CLAMP**

(30) Priority: 13.06.2006 JP 2006190953
(71) Applicant: Kosmek Ltd., Hyogo 651-2241 (JP)
(72) Inventor: YONEZAWA, Keitaro, Kobe-shi, Hyogo 651-2241 (JP); YOKOTA, Hideaki, Kobe-shi, Hyogo 651-2241 (JP)
(74) Representative: Horton, Andrew Robert Grant
(86) International application number: PCT/JP2007/061630
(87) International publication number: WO 2007/145142

(57) **Abstract**

A piston (19) inserted into a cylindrical housing (2) is connected to a clamp rod (5). A lock chamber (20) is provided above the piston (19), and an annular valve chamber (41) is formed in a peripheral wall of a rod hole (18) into which the clamp rod (5) is inserted. At a last stage of swing ascending of the clamp rod (5), a shuttle member (42) fitted at the outside of a lower portion of the clamp rod (5) ascends and fits into the valve chamber (41) due to a differential pressure of a pressurized oil applied when the shuttle member (42) starts to fit into the valve chamber (41). Then, a flow rate of the pressurized oil to be discharged from the lock chamber (20) is controlled by a restriction gap between the shuttle member (42) and the clamp rod (5). At an early stage of swing descending of the clamp rod (5), a flow rate of the pressurized oil to be supplied to the lock chamber (20) is controlled by a restriction gap between the valve chamber (41) and the shuttle member (42).

## Description

### Technical Field

The present invention relates to a clamp which presses a work after swinging a clamp rod, more specifically, to a clamp constructed so that the clamp rod is supported in a cylindrical housing axially movably and rotatably about an axis, and an arm is attachable to an upper portion of the clamp rod.

### Background of the Invention

According to a swing clamp of this type, conventionally, there is one described in Patent document 1 (JP2005-329525A). This conventional technique is constituted as follows.
In a housing, a cylinder hole and a rod hole are provided in this order toward a leading end, and a piston inserted into the cylinder hole is connected to a clamp rod. In a peripheral wall of the rod hole, a fitting hole for restriction is provided concentrically. A fitting portion which is fitted into the fitting hole via an annular restriction gap at a last stage of a swinging movement for releasing of the swing clamp is provided on a base end of the clamp rod. At the last stage of the swinging movement for releasing, a pressurized fluid in a lock chamber is discharged to a supply and discharge port through the annular restriction gap.
Patent document 1: JP2005-329525A

### Summary of the Invention

### Problem to be Solved by the Invention

In the above-described conventional technique, in a release operation, until just before the last stage of the swinging movement for releasing from a beginning of the operation, the pressurized fluid in the lock chamber is quickly discharged to the supply and discharge port through an annular passage, so that the clamp rod moves at a high speed. On the other hand, when the fitting portion starts to fit into the fitting hole while swinging at the last stage of the swinging movement for releasing, the pressurized fluid in the lock chamber starts to be discharged to the supply and discharge port through the annular restriction gap. Accordingly, a predetermined back pressure is kept inside the lock chamber by a flow resistance applied to the pressurized fluid passing through the restriction gap, and a movement speed of the clamp rod is rapidly reduced. Therefore, the clamp rod (and an arm) slowly stops.
As described above, until just before the last stage of the swinging movement for releasing from the beginning of the release operation, the clamp rod is moved at a high speed, and at the last stage of the swinging movement for releasing, the clamp rod is decelerated. This shortens the time for release operation. Additionally, the deceleration of the clamp rod at the last stage of the swinging movement for releasing makes the clamp rod (and the arm) stop slowly, so that a swinging mechanism including guide grooves and engagement balls, etc., can be prevented from being damaged and excellent swinging accuracy can be maintained.

As described above, the conventional technique is excellent in that shortening of the time for release operation and maintaining of swinging accuracy are both realized. However, to accurately fit the fitting hole for restriction provided on the peripheral wall of the rod hole and the fitting portion provided on the clamp rod, misalignment of an axis of the clamp rod and an axis of the rod hole of the housing must be within a predetermined range. Therefore, dimensional tolerances of components of the swing clamp must be strictly managed, and this increases the manufacturing cost of the components, and this leaves room for improvement.
An object of the present invention is to improve the above-described evil.

### Means for Solving the Problem

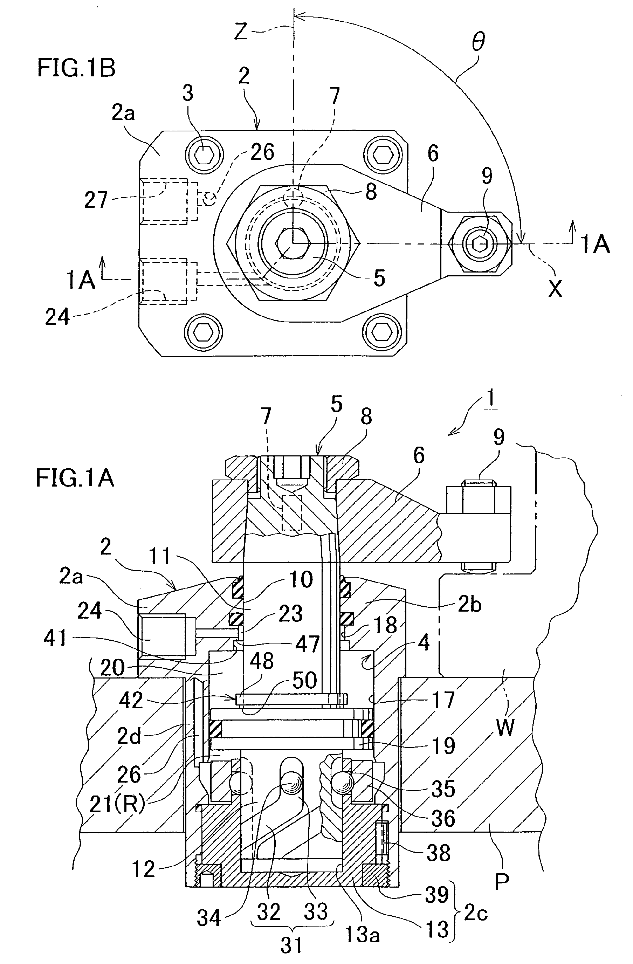

To achieve the above-described object, according to the invention of claim 1, for example, as shown in Fig. 1A to Fig. 4, or Fig. 5, or Fig. 6, a swing clamp is constructed as follows.
A clamp rod 5 is supported axially movably and rotatably about an axis in a cylindrical housing 2. The clamp rod 5 is constructed so that a clamping arm 6 is attachable to a leading end of the clamp rod 5. A cylinder hole 17 and a rod hole 18 are provided in the housing 2 toward the leading end in this order. A piston 19 inserted into the cylinder hole 17 is connected to the clamp rod 5. A lock chamber 20 which a pressurized fluid is supplied to and discharged from is provided on the leading end side of the piston 19. An annular valve chamber 41 is formed between the lock chamber 20 and a pressurized fluid supply and discharge port 24, and in a peripheral wall of the rod hole 18 so as to face the lock chamber 20. An annular shuttle member 42 has an inner peripheral surface and an outer peripheral surface. The inner peripheral surface of the annular shuttle member 42 is fitted axially movably at the outside of an outer peripheral surface 5a for restriction of the clamp rod 5 via an inner restriction gap 44. The outer peripheral surface of the shuttle member 42 is able to fit axially into an inner peripheral surface of the valve chamber 41 via an outer restriction gap 45 provided along the fitting region. In a release operation which discharges a pressurized fluid in the lock chamber 20 to the supply and discharge port 24 via the valve chamber 41, the clamp rod 5 is moved rectilinearly toward the leading end and then moved to the leading end while swinging for releasing via a swing mechanism. At a last stage of the swinging movement for releasing, the shuttle member 42 is moved toward the leading end and fitted to the valve chamber 41 by a differential pressure of the pressurized fluid applied when the shuttle member 42 starts fitting to the inner peripheral surface of the valve chamber 41, and a flow rate of the pressurized fluid to be discharged from the lock chamber 20 to the supply and discharge port 24 is controllable by at least the inner restriction gap 44. At an early stage of a swinging movement for locking in a lock operation which supplies the pressurized fluid in the supply and discharge port 24 to the lock chamber 20, the flow rate of the pressurized fluid to be supplied is controllable by at least the outer restriction gap 45.

The present invention brings about the following function and effect.
In a release operation, until just before the last stage of the swinging movement for releasing from the beginning of the release operation, the pressurized fluid in the lock chamber is quickly discharged to the supply and discharge port through the valve chamber, so that the clamp rod moves at a high speed. On the other hand, when the outer peripheral surface of the shuttle member starts to fit into the inner peripheral surface of the valve chamber at the last stage of the swinging movement for releasing, the shuttle member moves toward the leading end due to the differential pressure of the pressurized fluid applied when the outer peripheral surface starts fitting, and fits to the valve chamber. Accordingly, the flow rate of the pressurized fluid in the lock chamber is controlled by at least the inner restriction gap, and the controlled pressurized fluid starts to be discharged to the supply and discharge port. Therefore, a predetermined back pressure is kept inside the lock chamber by a flow resistance applied to the pressurized fluid passing through the inner restriction gap, and a swing ascending speed of the clamp rod starts to be reduced.
As the clamp rod moves while swinging, an axial length of the inner restriction gap increases and the flow resistance due to the inner restriction gap also increases. Therefore, the clamp rod slowly moves while swinging and changes to a release state.

As described above, until just before the last stage from the early stage of the swinging movement for releasing, the clamp rod is moved at the high speed, and at the last stage of the swinging movement for releasing, the clamp rod is decelerated, so that the time for release operation can be shortened. Further, at the last stage of the swinging movement for releasing, by decelerating the clamp rod, the clamp rod can be slowly stopped, so that a swinging mechanism including swinging grooves and engagement balls, etc., is prevented from being damaged and excellent swinging accuracy can be maintained.
Therefore, the swing clamp shortens the time necessary to complete the release operation by increasing a supply amount of the pressurized fluid and realizes a longer lifetime at the same time.
Further, by the inner restriction gap formed between the clamp rod and the shuttle member, the above-described effect is realized, so that deterioration of the effect due to misalignment between the axis of the clamp rod and the axis of the valve chamber can be prevented. Therefore, it becomes unnecessary to strictly manage manufacturing tolerances of components of the swing clamp, and the manufacturing cost of the swing clamp can be reduced.

Further, when starting a swinging movement for locking of the swing clamp, the flow rate of the pressurized fluid in the supply and discharge port is controlled by at least the outer restriction gap and the pressurized fluid is supplied to the lock chamber, so that the piston and the clamp rod starts to make a comparatively slow swinging movement. Then, after the piston and the clamp rod further moves and fitting between the valve chamber and the shuttle member is released, the pressurized fluid in the supply and discharge port is quickly supplied to the lock chamber through the valve chamber, so that the clamp rod moves at a high speed.
As described above, when starting a lock operation, the clamp rod can be made to start swinging at a comparatively low speed by a function of the outer restriction gap. Further, a thrust applied to the piston is a pressure to be applied to an annular area which deducts an outer diameter area of a sealing portion on an outer peripheral surface of the clamp rod from an outer diameter area of the shuttle member, so that the thrust is small. Therefore, excessive load on the swinging mechanism when starting swinging can be prevented. Accordingly, the swing clamp shortens the time necessary to complete a lock operation by increasing a supply amount of the pressurized fluid and realizes a longer lifetime at the same time.

It is preferable that the following constitution is added to the present invention.
For example, as shown in Fig. 1A to Fig. 4, or Fig. 5, dimensions of an outer diameter D1 of the piston 19, an outer diameter D2 of the outer peripheral surface 5a for restriction of the clamp rod 5, and an outer diameter D3 of a sliding portion 11 of the clamp rod 5 supported in the housing 2 are set so as to get smaller in this order.
In this case, even if the shuttle member always fits to the valve chamber due to gravity when the swing clamp is arranged in a posture upside down or an aslant posture, in a period until just before the last stage of the swinging movement for releasing from the release start, a comparatively large gap can be secured between the inner peripheral surface of the shuttle member and the outer peripheral surface of the sliding portion of the clamp rod, so that the high-speed movement of the clamp rod is not obstructed.

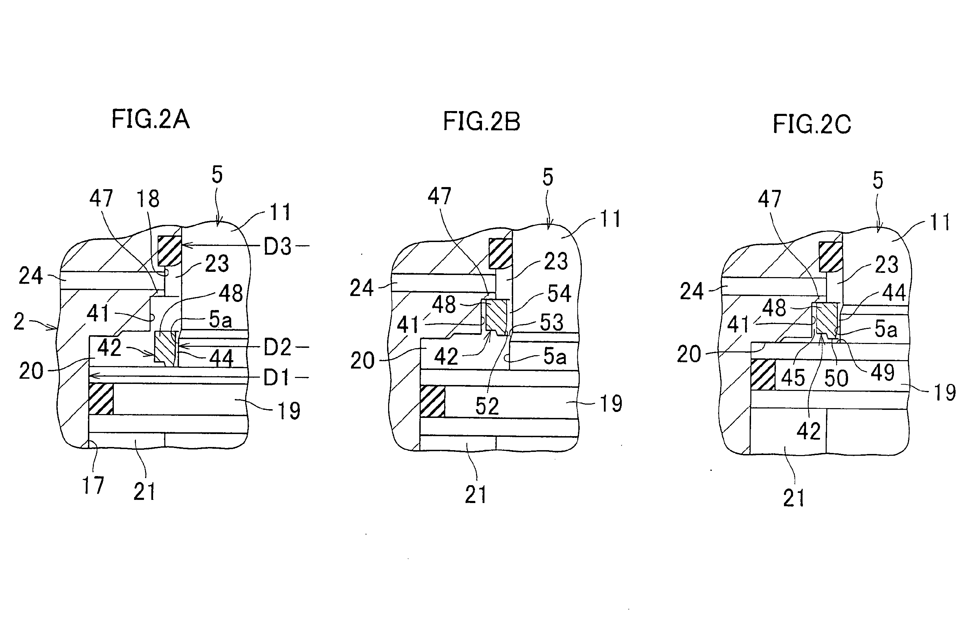

Further, it is preferable that the following constitution is added to the present invention.
For example, as shown in Fig. 2C and Fig. 3A, or Fig. 5, or Fig. 6, a valve portion 48 is provided on the shuttle member 42 so as to axially face a valve seat 47 provided on a peripheral wall of the valve chamber 41. At the last stage of the swinging movement for releasing, when the shuttle member 42 is moved toward the leading end due to the differential pressure, the valve portion 48 is brought into contact with the valve seat 47 to shut off the outer restriction gap 45. At the early stage of the swinging movement for locking, the valve portion 48 is spaced from the valve seat 47 by the pressurized fluid applied to the shuttle member 42.
In this case, at the last stage of the swinging movement for releasing, the flow rate of the pressurized fluid can be controlled by only the inner restriction gap.

Further, in the present invention, for example, as shown in Fig. 2C, or Fig. 5, or Fig. 6, it is preferable that the inner restriction gap 44 is set to a value smaller than the outer restriction gap 45.
In this case, by making the inner restriction gap smaller, the clamp rod can be reliably decelerated at the last stage of the swinging movement for releasing. Further, by making the inner restriction gap smaller and making the outer restriction gap larger, misalignment between the axis of the clamp rod and the axis of the valve chamber can be absorbed, so that it becomes unnecessary to strictly manage manufacturing tolerances of the components of the swing clamp, and the manufacturing cost can be further reduced.

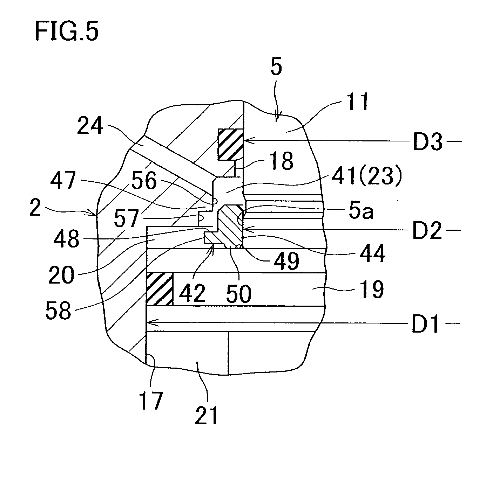

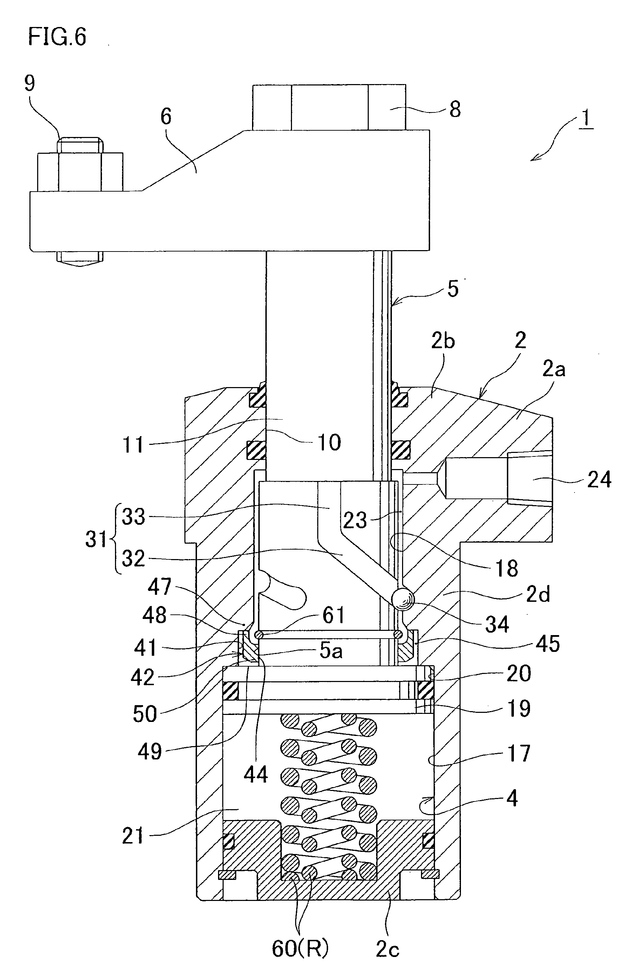

Further, in the present invention, for example, as shown in Fig. 2C or Fig. 6, a case where the valve seat 47 is provided on a leading end wall of the valve chamber 41, and the valve portion 48 is provided on a leading end portion of the shuttle member 42, and for example, as shown in Fig. 5, a case where the valve seat 47 is provided on a peripheral wall of a base end portion of the valve chamber 41, and the valve portion 48 is provided on a base end portion of the shuttle member 42, are conceivable.
In the latter case, the supply and discharge port of the pressurized fluid can be opened in the valve chamber, so that a height of the swing clamp can be made lower than in the former case where a wall for the valve seat must be provided between the valve chamber and the supply and discharge port.

Further, in the present invention, for example, as shown in Fig. 2C, or Fig. 5, or Fig. 6, it is preferable that another valve portion 50 facing axially a valve seat 49 provided on a leading end surface of the piston 19 is provided on a base end portion of the shuttle member 42.
In this case, at the early stage of the swinging movement for locking, it is possible that the inner restriction gap is shut off and the flow rate of the pressurized fluid is controlled by only the outer restriction gap.

### Brief Description of the Drawings

Fig. 1A and Fig. 1B illustrate a first embodiment of the present invention, Fig. 1A is an elevational sectional view of a lock state of a swing clamp, taken along the line 1A-1A of Fig.1B, and Fig. 1B is a plan view of Fig. 1A;
Fig. 2A is a view illustrating an ascending start state of a shuttle member at a last stage of a release movement of the swing clamp, Fig. 2B is a view illustrating an ascending finished state of the shuttle member, and Fig. 2C is a view illustrating a state where the release movement is finished;
Fig. 3A is a view illustrating a starting state of a lock movement of the swing clamp, and Fig. 3B is a view illustrating an early stage of the lock movement;
Fig. 4 is a view similar to Fig. 2B, illustrating a release start state when the swing clamp is arranged upside down;
Fig. 5 is a view similar to Fig. 2A, illustrating an exemplary variation of the shuttle member; and
Fig. 6 is a view illustrating a release state of a swing clamp of a second embodiment of the present invention.

### Description of the Reference Numerals and Letters

2: housing, 5: clamp rod, 5a: outer peripheral surface for restriction, 6: arm, 11: sliding portion of clamp rod 5, 17: cylinder hole, 18: rod hole, 19: piston, 20: lock chamber, 24: supply and discharge port of pressurized fluid (pressurized oil), 41: valve chamber, 42: shuttle member, 44: inner restriction gap, 45: outer restriction gap, 47: valve seat, 48: valve portion, 49: valve seat, 50: another valve portion, D1: outer diameter of piston 19, D2: outer diameter of outer peripheral surface 5a for restriction, D3: outer diameter of sliding portion 11

### Best Mode for Carrying Out the Invention

Fig. 1A to Fig. 4 illustrate a first embodiment of the present invention. First, a structure of a swing clamp will described with reference to Fig. 1A to Fig. 2C.

A flange 2a of a cylindrical housing 2 of a clamp 1 is fixed to a work pallet P with a plurality of bolts 3. A clamp rod 5 is inserted into a cylindrical hole 4 of the housing 2. To an upper end portion (leading end portion) of the clamp rod 5, a clamping arm 6 projecting radially outward is fixed at a predetermined swinging position with a stopper pin 7 and a nut 8. A push bolt 9 fixed to a projecting portion of the arm 6 presses a work W against an upper surface of the work pallet P.
Into a through hole 10 formed in an upper end wall 2b of the housing 2, an upper sliding portion 11 of the clamp rod 5 is supported vertically movably and hermetically. On a support cylinder 13 forming a part of a lower end wall 2c of the housing 2, a lower sliding portion 12 of the clamp rod 5 is supported vertically movably.

A means for driving the clamp rod 5 is constructed as a hydraulic double-acting type as follows, herein.
The cylindrical hole 4 of the housing 2 has a cylinder hole 17 and a rod hole 18 formed upward in this order substantially concentrically. A piston 19 hermetically inserted into the cylinder hole 17 is formed integrally with the clamp rod 5. Above the piston 19, a lock chamber 20 is provided, and below the piston 19, a release chamber 21 is provided.
An annular passage 23 is formed between a peripheral wall of the rod hole 18 and an outer peripheral surface of the upper sliding portion 11 of the clamp rod 5. A supply and discharge port 24 for locking is communicatively connected to an upper portion of the annular passage 23.
The release chamber 21 is communicatively connected to a supply and discharge port 27 for releasing via a vertical hole 26 formed in a barrel wall 2d of the housing 2. Specifically, pressurized oil supplied from the supply and discharge port 27 for releasing to the release chamber 21 and the piston 19 form a release driving means R.

A swinging mechanism is provided between the lower sliding portion 12 of the clamp rod 5 and an upper portion of the support cylinder 13. This swinging mechanism is constructed as follows.
A plurality of guide grooves 31 are provided at even intervals circumferentially on an outer peripheral surface of the lower sliding portion 12. Each guide groove 31 is formed by continuing upward a spiral swing groove 32 and a rectilinear groove 33 extending vertically. Engagement balls 34 are fitted in the respective guide grooves 31. Each engagement ball 34 is supported rotatably in a horizontal hole 35 provided at an upper portion of the support cylinder 13. A sleeve 36 is fitted at the outside of the plurality of engagement balls 34 and rotatably about an axis.
An outer peripheral wall of the support cylinder 13 is stopped so as not to rotate on the barrel wall 2d of the housing 2 via a positioning pin 38 extending vertically. The support cylinder 13 is fixed to the barrel wall 2d by a ring member 39.

Further, a means for decelerating a swinging movement of the clamp rod 5 is provided.
Specifically, an annular valve chamber 41 is formed between the lock chamber 20 and the supply and discharge port 24 for locking, and in a peripheral wall of the rod hole 18 to diametrically expand a lower portion of the annular passage 23 , and a lower surface of the valve chamber 41 faces the lock chamber 20.
Mainly, as shown in Fig. 2C, at a lower portion of the clamp rod 5, an inner peripheral surface of an annular shuttle member 42 is fitted at the outside of an outer peripheral surface 5a for restriction vertically (axially) movably via an inner restriction gap 44. An outer diameter D1 of the piston 19, an outer diameter D2 of the outer peripheral surface 5a for restriction of the clamp rod 5, and an outer diameter D3 of the upper sliding portion 11 are set so as to get smaller in this order (see Fig. 2A). An outer peripheral surface of the shuttle member 42 is able to fit axially to an inner peripheral surface of the valve chamber 41, and an outer restriction gap 45 is provided along the fitting region. In this embodiment, the inner restriction gap 44 is set to a value smaller than the outer restriction gap 45.

On an upper end portion (leading end portion) of the shuttle member 42, a valve portion 48 facing vertically a valve seat 47 provided on an upper end wall (leading end wall) of the valve chamber 41 is arranged. Further, on a lower end portion (base end portion) of the shuttle member 42, another valve portion 50 facing axially a valve seat 49 provided on an upper end face of the piston 19 is arranged.

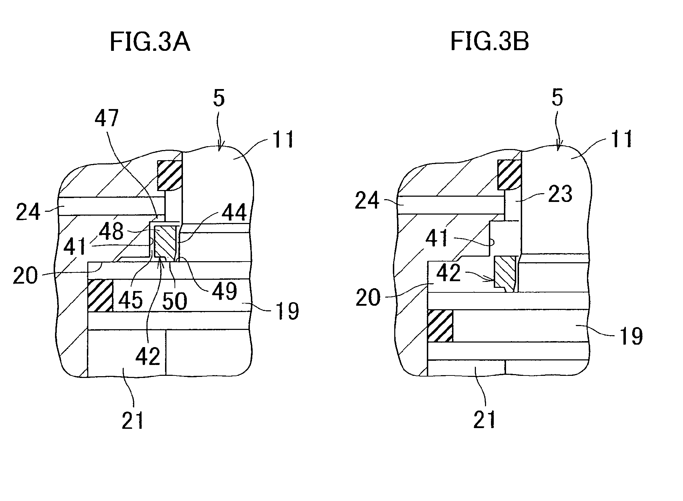

Operations of the swing clamp 1 constructed as described above will be described with reference to Fig. 1A to Fig. 2C, and Fig. 3A and Fig. 3B. Fig. 3A is a view illustrating a starting state of a lock movement of the swing clamp, and Fig. 3B is a view illustrating an early stage of the lock movement.

In a lock state of Fig. 1A and Fig. 1B, the pressurized oil is discharged from the release chamber 21 and the pressurized oil is supplied to the lock chamber 20, and accordingly, the clamp rod 5 descends to a locking swing position X, and the arm 6 presses the work W against the work pallet P. In this first embodiment, as shown in Fig. 1B, a full swing angle θ (theta) from the locking swing position X to a releasing swing position Z through a deceleration starting position (not shown) of the clamp rod 5 and the arm 6 is set to about 90 degrees.

To change the clamp in the lock state to a release state, the supply and discharge port 24 for locking is communicatively connected to an oil tank (not shown), and a pressurized oil in a hydraulic source (not shown) is supplied to the release chamber 21 via the supply and discharge port 27 for releasing and the vertical hole 26.
Then, the pressurized oil in the lock chamber 20 is quickly discharged to the supply and discharge port 24 for locking through the valve chamber 41 of the annular passage 23. Accordingly, first, the piston 19 raises the clamp rod 5 (and the arm 6) straight along the rectilinear grooves 33 at a high speed, and subsequently, the clamp rod 5 ascends while swinging at a high speed counterclockwise in a plan view along the swing grooves 32.

Then, after the clamp rod 5 (and the arm 6) swings in a region of a high-speed swing angle (herein, about 70 degrees), as shown in Fig. 2A, the outer peripheral surface of the shuttle member 42 starts to fit into the inner peripheral surface of the valve chamber 41. Accordingly, the shuttle member 42 ascends as shown in Fig. 2B by a differential pressure of the pressurized oil applied vertically and is fitted into the valve chamber 41, and brings the valve portion 48 into contact with the valve seat 47. Therefore, the outer restriction gap 45 is shut off, and the pressurized oil in the lock chamber 20 starts to be discharged to the supply and discharge port 24 for locking through a comparatively large gap 54 at an inner side of the shuttle member 42.

At an early stage of swinging ascending of the clamp rod 5, an outer tapered surface 53 on an outer peripheral lower portion of the clamp rod 5 faces an inner tapered surface 52 on an inner peripheral lower portion of the shuttle member 42, so that slow deceleration is possible. Until reaching the release finished state of Fig. 2C from the state of Fig. 2B, as the clamp rod 5 ascends while swinging, a vertical length of the inner restriction gap 44 increases and a flow resistance in the inner restriction gap 44 also increases. Therefore, the clamp rod 5 (and the arm 6) slowly ascends while swinging in a region of a deceleration swing angle (herein, about 20 degrees), and changes to a releasing swing position Z (see Fig. 1B).
In the release finished state of Fig. 2C, between the other valve portion 50 provided on the lower portion of the shuttle member 42 and the valve seat 49 of the piston 19, a contact gap is formed.

As described above, at the last stage of the swinging movement for releasing, the speed of the clamp rod 5 (and the arm 6) is decelerated and the piston 19 slowly comes into contact with the upper end wall 2b of the housing 2. Therefore, an impact force to be applied to the swing grooves 32, the engagement balls 34, the stopper pin 7, and the positioning pin 38, etc., is reduced.
As a result, plastic deformation and damages to the swinging mechanism including the swing grooves 32 and the engagement balls 34, etc., can be prevented and an excellent swing angle can be maintained, and the lifetime of the clamp 1 is extended. Further, the impact is reduced, so that noise and vibration are also reduced, loosening of the screw fitting of the nut 8 which fixes the arm 6 to the clamp rod 5 can be prevented and the work pallet P and the work W are not negatively influenced. Therefore, the swing clamp realizes both of a shorter time necessary to complete a release operation by increasing a supply amount of the pressurized oil and a longer lifetime.

When the clamp 1 in the release state shown in Fig. 2C is changed to the lock state, the pressurized oil in the release chamber 21 is discharged from the supply and discharge port 27 for releasing and the pressurized oil is supplied to the supply and discharge port 24 for locking. Accordingly, the pressurized oil in the supply and discharge port 24 for locking acts on an upper surface of the shuttle member 42, and as shown in Fig. 3A, the shuttle member 42 descends, the valve portion 48 is spaced from the valve seat 47 to open the outer restriction gap 45, and the other valve portion 50 comes into contact with the valve seat 49 of the piston 19 to shut off the inner restriction gap 44. Then, the pressurized oil in the supply and discharge port 24 for locking is supplied to the lock chamber 20 through the outer restriction gap 45 and, hence, comparatively slowly lowers the piston 19. Accordingly, first, the clamp rod 5 comparatively slowly descends while swinging clockwise in a plan view along the swing grooves 32, and then, descends straight along the rectilinear grooves 33 and changes to the lock state (see Fig. 1A and Fig. 1B).

When starting the lock operation, the clamp rod 5 (and the arm 6) can be started to swing at a comparatively low speed by the function of the outer restriction gap 45. In addition, in the state of Fig. 3A, a lowering thrust to be applied to the piston 19 is a hydraulic force to be applied to an annular area that deducts an outer diameter area of a sealing portion on an outer peripheral surface of the upper sliding portion 11 from an outer diameter area of the shuttle member 42, so that the thrust is small. Therefore, an excessive load on the swinging mechanism when starting swinging can be prevented. Accordingly, the swing clamp realizes both of a shorter time necessary to complete a lock operation by increasing a supply amount of the pressurized oil and a longer lifetime.

The above-described embodiment further has the following advantages.
A restriction in a release operation is controlled mainly by the inner restriction gap 44, and a restriction in a lock operation is controlled mainly by the outer restriction gap 45, so that control can be performed differently between a release operation and a lock operation of the swing clamp.
The inner restriction gap 44 is formed between the clamp rod 5 where axial accuracy is easily secured and the shuttle member 42, so that it is hardly influenced by dimensional errors. The outer restriction gap 45 can be set to a value larger than the inner restriction gap 44, so that it is hardly influenced by dimensional errors of the through hole 10 of the housing 2 and a hole 13a of the support cylinder 13 which are difficult to secure axial accuracy. Therefore, the housing 2 can be efficiently manufactured in a predetermined dimensional tolerance.

When assembling the swing clamp, a restriction effect can be tested in advance in a condition where two components of the clamp rod 5 and the shuttle member 42 are sub-assembled, and this is not troublesome in comparison with a case where the restriction effect is tested after final assembly. In other words, when the clamp has a structure in which the restriction effect is tested inevitably after final assembly of the swing clamp, if it is rejected, it is necessary that the rejected clamp must be disassembled and a defective component is replaced and then the clamp is tested again, and such a test involving trial and error is very troublesome.

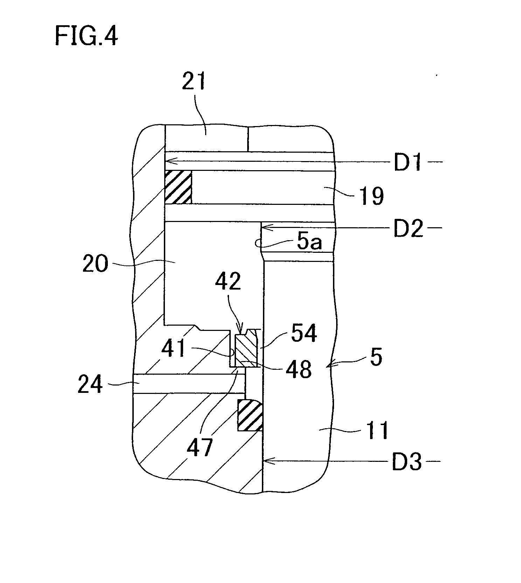

Fig. 4 is a view similar to Fig. 2B, illustrating a release start state when the swing clamp is arranged upside down.
In this release start state shown in Fig. 4, the shuttle member 42 descends due to gravity earlier than the piston 19 and fits into the valve chamber 41. As described above, the outer diameter D1 of the piston 19, the outer diameter D2 of the outer peripheral surface 5a for restriction of the clamp rod 5, and the outer diameter D3 of the upper sliding portion 11 of the clamp rod 5 are set so as to get smaller in this order, so that until a last stage from an early stage of a release operation, the pressurized oil is quickly discharged through the large gap 54 between the inner peripheral surface of the shuttle member 42 and the outer peripheral surface of the upper sliding portion 11, and the piston 19 and the clamp rod 5 rapidly descend. Then, after the outer peripheral surface 5a for restriction of the clamp rod 5 starts to fit to the inner peripheral surface of the shuttle member 42, the inner restriction gap 44 performs a restricting function similar to the operation from Fig. 2B to Fig. 2C.
Therefore, the present invention has the above-described advantages even when the swing clamp is arranged in a posture upside down or aslant.

Fig. 5 is a view similar to Fig. 2A, illustrating an exemplary variation of the first embodiment. This exemplary variation (and a second embodiment described later) will be described by attaching a member similar to a component of the first embodiment with the same reference numeral in principle.

The exemplary variation of Fig. 5 is different from the first embodiment in the following point.
The valve chamber 41 is formed in substantially the entirety of the annular passage 23, and in a small-diameter hole 56 of an upper half portion of the valve chamber 41, the supply and discharge port 24 for locking is opened. The upper half portion of the shuttle member 42 can be fitted into the small-diameter hole 56. Between an outer peripheral surface of the upper half portion of the shuttle member 42 and an inner peripheral surface of the small-diameter hole 56, the outer restriction gap (not shown) can be formed.

A flange 58 of the shuttle member 42 can be inserted into a large-diameter hole 57 at a lower portion of the valve chamber 41. On a top wall of the large-diameter hole 57 (a peripheral wall on a base end portion of the valve chamber 41), the valve seat 47 is formed, and the valve portion 48 is formed on an upper surface of the flange 58.
The valve seat 47 is provided on a peripheral wall of a lower end portion (base end portion) of the valve chamber 41, and the valve portion 48 is provided on a lower end portion (base end portion) of the shuttle member 42, so that the supply and discharge port 24 for locking can be opened in an upper portion of the valve chamber 41. Therefore, an axial length of the annular passage 23 becomes shorter, and a height of the swing clamp can be made lower.

Similar to the first embodiment, on the lower end portion (base end portion) of the shuttle member 42, another valve portion 50 facing axially the valve seat 49 provided on an upper end face of the piston 19 is arranged.
Further, similar to the first embodiment, the outer diameter D1 of the piston 19, the outer diameter D2 of the outer peripheral surface 5a for restriction of the clamp rod 5, and the outer diameter D3 of the upper sliding portion 11 of the clamp rod 5 are set so as to get smaller in this order.
The above-described exemplary variation operates similar to the first embodiment.

Fig. 6 is a view illustrating a release state of a swing clamp of a second embodiment of the present invention.
This second embodiment is different from the first embodiment in the following point.
The swing clamp 1 employs a hydraulic lock and spring release type. Specifically, the clamp rod 5 projects upward from the piston 19. The clamp rod 5 is driven to descend by the pressurized oil in the lock chamber 20 formed above the piston 19 similar to the first embodiment, however, it is driven to ascend by a return spring 60 mounted to the release chamber 21 below the piston 19. The return spring 60 forms a release driving means R.

The rod hole 18 is formed long vertically in comparison with that in the first embodiment of Fig. 1A. The plurality of guide grooves 31 are formed at a lower portion of the clamp rod 5. Each engagement ball 34 fitted in the guide grooves 31 is supported on the barrel wall 2d of the housing 2. Screwing direction of the swing groove 32 of the guide groove 31 is opposite to that of the first embodiment. The supply and discharge port 24 for locking is opened at an upper end portion of the rod hole 18.

The valve chamber 41 is formed at a lower portion of the rod hole 18. The inner restriction gap 44 is formed between the outer peripheral surface 5a for restriction at a lower portion of the clamp rod 5 and the inner peripheral surface of the shuttle member 42. The outer restriction gap 45 is formed between the outer peripheral surface of the shuttle member 42 and the inner peripheral surface of the valve chamber 41.
The shuttle member 42 is constrained from moving upward by a stopper ring 61. Oil which passes through the inner restriction gap 44 flows through a slit or fitting gap of the stopper ring 61. The valve seats 47, 49 and the valve portions 48, 50 are arranged similar to the first embodiment.
The clamp 1 of the second embodiment operates similar to the first embodiment.
Further, a movement constraint member such as the stopper ring 61 may be provided in the first embodiment and the exemplary variation.

Each embodiment and exemplary variation described above may be changed as follows.
The swing angle θ (theta) is not limited to the exemplified values, and can be set to various desired values.
The structure of the first embodiment (Fig. 1A to Fig. 4) may employ a hydraulic lock and spring release type similar to the structure of the second embodiment (Fig. 6). The structure of the second embodiment (Fig. 6) may employs a hydraulic lock and hydraulic release type similar to the structure of the first embodiment (Fig. 1A to Fig. 4).
It is also possible that the swing clamp 1 is arranged aslant or upside down instead of the exemplified vertical arrangement.
The pressurized fluid may be other liquids or a gas such as compressed air instead of the pressurized oil.

## Claims

1. A swing clamp having: a clamp rod (5) which is supported axially movably and rotatably about an axis in a cylindrical housing (2) and is constructed so that a clamping arm (6) is attachable to a leading end of the clamp rod (5); a cylinder hole (17) and a rod hole (18) provided in the housing (2) toward the leading end in this order; a piston (19) inserted into the cylinder hole (17) and connected to the clamp rod (5); and a lock chamber (20) which a pressurized fluid is supplied to and discharged from, provided on the leading end side of the piston (19), the swing clamp comprising:
an annular valve chamber (41) formed between the lock chamber (20) and a pressurized fluid supply and discharge port (24), and in a peripheral wall of the rod hole (18) so as to face the lock chamber (20),
an annular shuttle member (42) having an inner peripheral surface and an outer peripheral surface, the inner peripheral surface of the annular shuttle member (42) is fitted axially movably at the outside of an outer peripheral surface (5a) for restriction of the clamp rod (5) via an inner restriction gap (44), and the outer peripheral surface of the shuttle member (42) is able to fit axially into an inner peripheral surface of the valve chamber (41) via an outer restriction gap (45) provided along the fitting region,
in a release operation which discharges a pressurized fluid in the lock chamber (20) to the supply and discharge port (24) via the valve chamber (41), the clamp rod (5) is moved rectilinearly toward the leading end and then moved to the leading end while swinging for releasing via a swing mechanism,
at a last stage of the swinging movement for releasing, the shuttle member (42) is moved toward the leading end and fitted to the valve chamber (41) by a differential pressure of the pressurized fluid applied when the shuttle member (42) starts fitting to the inner peripheral surface of the valve chamber (41), and a flow rate of the pressurized fluid to be discharged from the lock chamber (20) to the supply and discharge port (24) is controllable by at least the inner restriction gap (44), and
at an early stage of a swinging movement for locking in a lock operation which supplies the pressurized fluid in the supply and discharge port (24) to the lock chamber (20), the flow rate of the pressurized fluid to be supplied is controllable by at least the outer restriction gap (45).

2. The swing clamp according to claim 1, wherein
dimensions of an outer diameter (D1) of the piston (19), an outer diameter (D2) of the outer peripheral surface (5a) for restriction of the clamp rod (5), and an outer diameter (D3) of a sliding portion (11) of the clamp rod (5) supported in the housing (2) are set so as to get smaller in this order.

3. The swing clamp according to claim 1 or 2, wherein
a valve portion (48) is provided on the shuttle member (42) so as to axially face a valve seat (47) provided on a peripheral wall of the valve chamber (41),
at the last stage of the swinging movement for releasing, when the shuttle member (42) is moved toward the leading end due to the differential pressure, the valve portion (48) is brought into contact with the valve seat (47) to shut off the outer restriction gap (45), and
at the early stage of the swinging movement for locking, the valve portion (48) is spaced from the valve seat (47) by the pressurized fluid applied to the shuttle member (42).

4. The swing clamp according to claim 1 or 2, wherein
the inner restriction gap (44) is set to a value smaller than the outer restriction gap (45).

5. The swing clamp according to claim 1 or 2, wherein
the valve seat (47) is provided on a leading end wall of the valve chamber (41), and the valve portion (48) is provided on a leading end portion of the shuttle member (42).

6. The swing clamp according to claim 1 or 2, wherein
the valve seat (47) is provided on a peripheral wall of a base end portion of the valve chamber (41), and the valve portion (48) is provided on a base end portion of the shuttle member (42).

7. The swing clamp according to claim 1 or 2, wherein
another valve portion (50) facing axially a valve seat (49) provided on a leading end surface of the piston (19) is provided on a base end portion of the shuttle member (42).
